Europäisches Patentamt

European Patent Office

Office européen des brevets

(19)

(11) Veröffentlichungsnummer: **0 255 646 B1**

(12) **EUROPÄISCHE PATENTSCHRIFT**

(45) Veröffentlichungstag der Patentschrift:
18.07.90

(21) Anmeldenummer: 87110511.0

(22) Anmeldetag: 21.07.87

(51) Int. Cl.⁵: **G11B 23/087**

(54) **Magnetbandcassette.**

(30) Priorität: 02.08.86 DE 3626222

(43) Veröffentlichungstag der Anmeldung:
10.02.88 Patentblatt 88/6

(45) Bekanntmachung des Hinweises auf die Patenterteilung:
18.07.90 Patentblatt 90/29

(84) Benannte Vertragsstaaten:
**BE DE FR GB IT NL**

(56) Entgegenhaltungen:
**EP-A- 0 008 001**
**DE-A- 2 633 672**
**DE-A- 2 937 556**
**DE-U- 7 208 034**
**FR-A- 2 495 812**
**GB-A- 2 019 357**

(73) Patentinhaber: **Agfa-Gevaert AG,**
**D-5090 Leverkusen 1(DE)**

(72) Erfinder: **Hölbl, Dieter, Ottobrunner Strasse 8,**
**D-8000 München 83(DE)**
Erfinder: **Pertzsch, Albert, Dipl.-Ing., Leutstettener**
**Strasse 29, D-8000 München 70(DE)**
Erfinder: **Klose, Gustav, Dipl.-Ing., Adalbertstrasse 49,**
**D-8000 München 40(DE)**

## Beschreibung

Die Erfindung betrifft eine Magnetbandcassette und insbesondere eine Compact-Cassette mit verbesserter Andruckeinrichtung.

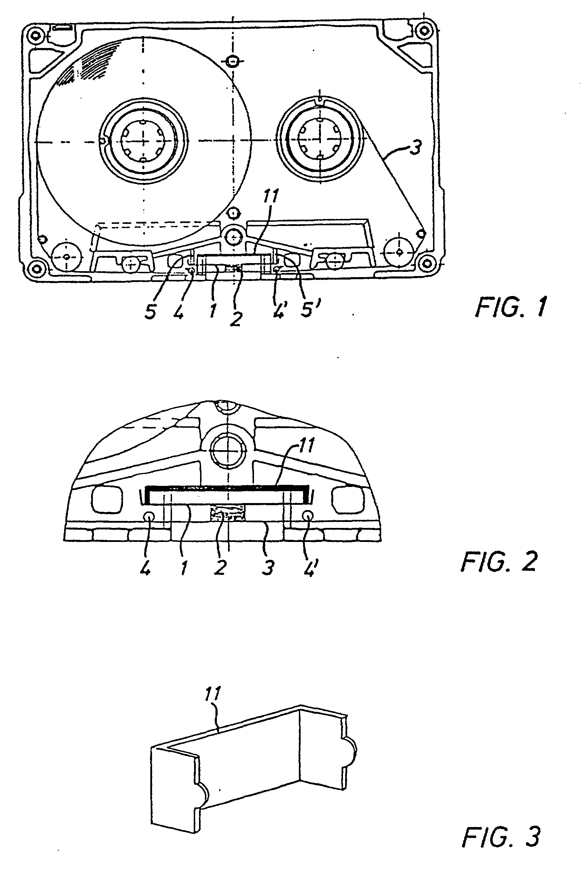

Herkömmliche Compact-Cassetten nach Figur 1 sind mit einer Andruckeinrichtung versehen, die eine Blattfeder (1) und ein Kissen (2) aufweist, um das Magnetband (3) gegen den (nicht gezeichneten) Magnetkopf zwecks magnetischer Aufzeichnung oder Wiedergabe anzupressen. Üblicherweise besteht die Andruckeinrichtung aus Filz oder ähnlichem Material, das auf dem mittleren Teil der Blattfeder sitzt, bei der es sich um einen elastischen Metallstreifen aus Phosphorbronze oder dergleichen handelt, der an beiden Enden abgebogen ist, so daß ein U-Profil entsteht. Die Blattfeder wird an ihren umgebogenen Enden zwischen Bandführungsstiften (4, 4'), den sogenannt Azimutstiften und den dahinter liegenden Widerlagern (5, 5') gelagert. Diese Widerlager können von der Kopfkammer ausgehende Stege oder Stifte sein. Ein magnetisch wirksames Abschirmblech (11) ist hinter dem Andruckkissen angeordnet und schirmt die magnetische Wechselwirkung zwischen Kopf und Magnetband gegen andere Bereiche des Magnetbandes ab. Bekannt sind auch Vorschläge, das Abschirmblech mit der Andruckeinrichtung zu kombinieren, wie beispielsweise in den DE-OS 26 33 672 und 28 35 459 sowie der DE-GM 72 08 034 vorgeschlagen.

Die Andruckeinrichtung muß das Magnetband auf seiner gesamten Breite möglichst gleichmäßig an den Magnetkopf anpressen. Dies wird dann problematisch, wenn entweder die Bandführungsstifte schief sitzen, der geräteseitige Tonkopf schief steht oder wenn die Magnetbandcassette verkantet in den Recorder eingesetzt worden ist. Zwar ist die flexible Andruckfeder zwischen den Bandführungsstiften und den dahinter liegenden Widerlagern mit einem gewissen Spiel gelagert, doch reicht dies erfahrungsgemäß nicht aus, um einen gleichmäßigen Bandandruck auf den Magnetkopf zu gewährleisten.

Einen verbesserten Andruck des Kissens auf dem Band soll der Erfindungsgegenstand der DE-OS 29 12 065 bewirken, wobei ein federnd gelagerter Stützarm, der durch das Abschirmelement durchgreift, beschrieben ist, während in der DE-OS 29 37 556 eine besonders geformte Blattfeder mit Flügelabschnitten und Y-förmigen Abschnitten geschützt wird.

Außerdem sind cassetten bekannt, bei denen das Abschirmblech eine U-förmige Gestalt hat und wobei die Enden des Abschirmbleches als Widerlager für die Blattfeder bestimmt sind (Figur 2), wie beispielsweise in der DE-OS 2 455 705 und der US-A 3 851 115 vorgeschlagen. Dabei kann der mittlere Teil des umgebogenen Endes in abgerundeter Form gekröpft sein (Figur 3), so daß die auf ihm lagernde Andruckfeder bei den oben erwähnten Deformationszuständen auf und ab gleiten und so die gewünschte Lage einnehmen kann. Nachteilig ist bei dieser Ausführungsform, daß herstellungsbedingt ein solches Abschirmelement an den gekröpften Teilen Grate haben kann, die ein reibungsarmes Gleiten der Blattfeder behindern und daß die Herstellung eines solchen Abschirmelementes mit gleichbleibender Präzision nicht einfach ist.

Deswegen bestand die Aufgabe, eine Magnetbandcassette zu schaffen, bei welcher die Andruckfeder das Magnetband auch bei schiefstehenden Bandführungsstiften, schiefem Tonkopf oder bei verkantet eingelegter Cassette gleichmäßig an den Tonkopf andrückt und wobei die Magnetbandcassette dabei einfach zu fertigen sein soll.

Die Aufgabe wurde erfindungsgemäß gelöst mit einer Magnetbandcassette, welche die im kennzeichnenden Teil des Anspruchs 1 genannten Merkmale aufweist.

Nähere Einzelheiten gehen aus den Unteransprüchen, der Beschreibung und den Zeichnungen hervor.

Die Erfindung wird nun anhand der Zeichnungen näher erläutert, und zwar zeigt

Figur 1 eine Draufsicht auf eine herkömmliche Magnetbandcassette

Figur 2 einen Ausschnitt aus Figur 1 mit einer weiteren herkömmlichen Ausführungsform einer Magnetbandcassette

Figur 3 eine perspektivische Darstellung einer herkömmlichen Ausführungsform eines Abschirmbleches

Figur 4 eine Draufsicht auf den vorderen mittleren Teil einer Magnetbandcassette in der erfindungsgemäßen Ausführung

Figur 5 einen Schnitt entlang der Linie V - V aus Figur 4.

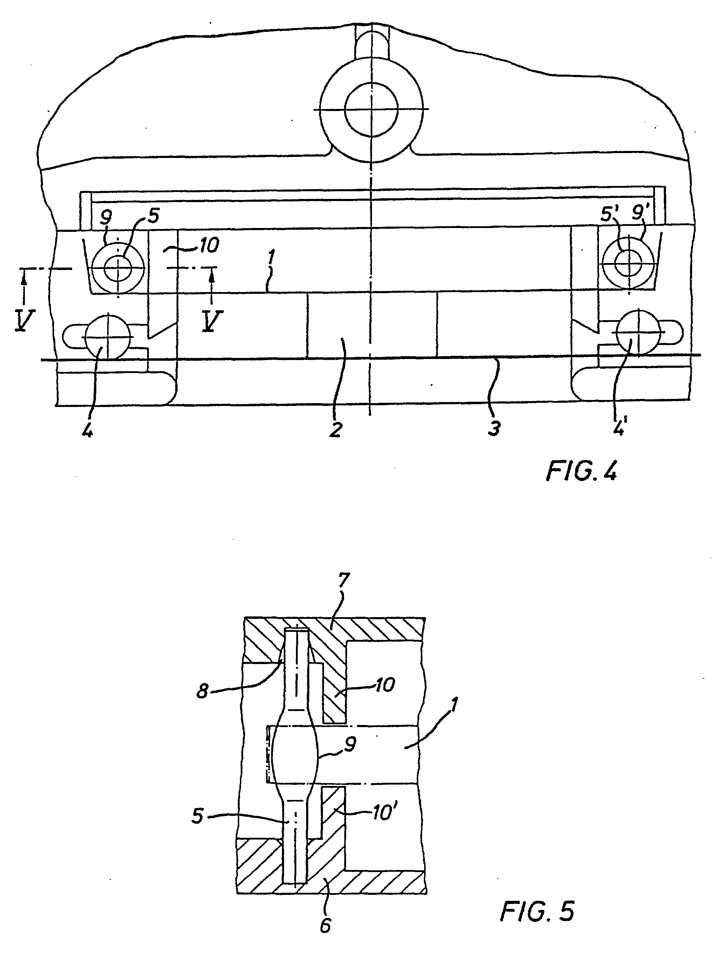

Die erfindungsgemäße Magnetbandcassette besitzt als Andruckvorrichtung für das Magnetband (3) die Blattfeder (1) mit dem Andruckkissen (2). Als Lagerung der umgebogenen Enden der Blattfeder dienen die Bandführungsstifte (4, 4') und die Widerlager (5, 5'). Letztere haben, wie Figur 4 zeigt, einen kreisförmigen Querschnitt und sind entsprechend Figur 5 in dem Bodenteil (6) fest verankert und werden zum Zusammensetzen der Magnetbandcassette in Ausnehmungen (8) des Deckelteils (7) abgestützt. Der mittlere Bereich (9) des Widerlagers, der im Bereich der die Höhenführung der Blattfeder bewirkenden Stege (10, 10') des Boden- und Deckelteils liegt, ist tonnenförmig aufgewölbt. Der Krümmungsradius der Wölbung liegt in der Größenordnung von 3 - 7 mm. Das Widerlager kann aus Kunststoff, beispielsweise aus dem gleichen Material wie das Boden- und Deckelteil der Magnetbandcassette bestehen, es kann sich aber auch un einen Metallstift mit der neuerungsgemäßen Form handeln. Wichtig ist eine genügend glatte Oberfläche des Widerlagers in dem Bereich, in dem die Blattfeder gleitend gelagert ist.

Gegenüber bekannten Lösungen ist die Cassette einfach zu montieren und die Blattfeder kann, da sie auf dem neuerungsgemäßen Widerlager reibungsarm gleitet, von selbst bei angedrücktem Tonkopf die für einen gleichmäßigen Andruck des Magnetbandes erforderliche Position einnehmen.

## Patentansprüche

1. Magnetbandcassette, bestehend aus einem Boden- und einem Deckelteil, mit einer frontseitigen Öffnung für einen geräteseitigen Tonkopf, einer Andruckeinrichtung für das Magnetband, die ein Kissen und eine das Kissen haltende einteilige Blattfeder aufweist, welche beiderseits der Öffnung zwischen Bandführungsstiften und dahinter liegenden Widerlagern steckbar gelagert ist, dadurch gekennzeichnet, daß die Widerlager (5, 5') Stifte mit kreisförmigem Querschnitt sind, welche im Bereich der die Höhenführung der Blattfeder bewirkenden Stege (10, 10') des Bodenbeziehungsweise Deckelteils tonnenförmig (9) gewölbt sind, und wobei die Stifte im Bodenteil (6) fest verankert und im Deckelteil (7) abgestützt sind.

2. Magnetbandcassette nach Anspruch 1, dadurch gekennzeichnet, daß der tonnenförmige Bereich (9) der Widerlager (5, 5') einen Krümmungsradius von 3 - 7 mm besitzt.

## Claims

1. A magnetic tape cassette consisting of a base and a cover, a frontal opening for the sound head of a cassette player, a pressure mechanism for the magnetic tape comprising a pad and a one-piece leaf spring which holds the pad and which is mounted for insertion on both sides of the opening between tape guide pins and supports situated behind them, characterized in that the supports (5, 5') are pins of circular cross-section which are curved in the shape of a barrel (9) in the region of the webs (10, 10') of the base and cover which are responsible for the vertical guiding of the leaf spring, the pins being firmly anchored in the base (6) and supported in the cover (7).

2. A magnetic tape cassette as claimed in claim 1, characterized in that the barrel-like region (9) of the supports (5, 5') has a radius of curvature of 3 to 7 mm.

## Revendications

1. Cassette de bande magnétique composée d'une partie fond de boîte et d'une partie couvercle, et comprenant une ouverture frontale pour le passage d'une tête magnétique solidaire de l'appareil, un dispositif de pression pour presser la bande magnétique, qui présente un patin et un ressort lame d'une seule pièce qui tient le patin, et qui est monté de façon à pouvoir être emboîté, sur les deux côtés de l'ouverture, entre les tiges de guidage de la bande, et des appuis situés en arrière, caractérisée en ce que les appuis (5, 5') sont de section circulaire et sont bombés en forme de tonneau (9) dans la région des nervures (10, 10') de la partie fond de boîte et de la partie couvercle, qui jouent le rôle de guidage en hauteur pour le ressort lame, et les tiges sont ancrées rigidement dans la partie fond de boîte (6) et appuyées dans la partie couvercle (7).

2. Cassette de bande magnétique selon la revendication 1, caractérisée en ce que la région en forme de tonneau (9) des appuis (5, 5') possède un rayon de courbure de 3 à 7 mm.

FIG. 1

FIG. 2

FIG. 3

FIG. 4

FIG. 5